# FASCICULE DE BREVET EUROPEEN

(11) **EP 2 708 168 B1**
(45) Date de publication et mention de la délivrance du brevet: **16.03.2016**
(21) Numéro de dépôt: 13182870.9
(22) Date de dépôt: 03.09.2013
(51) Int. Cl.: A47J 43/046, B67D 3/04, A47J 43/07

(54) **Appareil ménager pour émulsionner ou mélanger une préparation alimentaire fluide dont le robinet de distribution est manoeuvré par pincement**
Haushaltsgerät zum Emulgieren oder Mischen einer flüssigen Nahrungsmittelzubereitung, bei dem der Weghahn durch Abklemmen bedient wird
Kitchen appliance for emulsifying or mixing a fluid food preparation, the dispensing valve of which is operated by clamping

(30) Priorité: 17.09.2012 FR 1258706
(43) Date de publication de la demande: 19.03.2014
(73) Titulaire: SEB S.A., 69130 Ecully (FR)
(72) Inventeur: Hiron, Frédéric, 72130 SAINT OUEN DE MIMBRE (FR)
(74) Mandataire: Bourrières, Patrice

(56) Documents cités:
- EP-A1- 2 005 868
- EP-A1- 2 198 760
- KR-A- 20110 100 917
- US-A1- 2009 161 482
- US-B1- 7 140 520

## Description

La présente invention concerne le domaine technique des appareils ménagers utilisés pour émulsionner ou mélanger des préparations alimentaires fluides tels que, par exemple mais non exclusivement, les appareils managers utilisés pour émulsionner des boissons chaudes ou froides à base de lait appelés «mousseurs» à lait.

Il est connu d'une demande de brevet EP 2 198 760 un appareil ménager pour émulsionner ou mélanger une préparation alimentaire fluide comprenant un récipient amovible, qui comprend, à proximité du fond du récipient, un outil rotatif pour émulsionner ou mélanger la préparation alimentaire, et qui est pourvu d'un robinet de distribution comprenant un levier de manoeuvre d'une vanne d'ouverture asservie en fermeture. L'appareil ménager comprend également un châssis supportant le récipient et comprenant un moteur électrique associé à des moyens d'entrainement de l'outil rotatif en rotation. Selon ce document, pour commander la distribution, par le robinet, de la préparation alimentaire réalisée au moyen de l'appareil ménager il convient de soulever le levier. Or, cette manoeuvre est susceptible d'induire un déséquilibre voire un basculement de l'appareil ménager lorsqu'elle est réalisée le récipient étant en place sur le châssis. De plus, lorsque le récipient est retiré du châssis, cette manoeuvre est particulièrement difficile à mener d'une main en tenant le récipient de l'autre. Un autre appareil est connu du document KR 20110100917 A.

Il est donc apparu le besoin d'un appareil ménager dont la manoeuvre du robinet de distribution ne soit pas susceptible d'induire un basculement ou un déséquilibre de l'appareil.

Afin d'atteindre cet objectif, l'invention concerne un appareil ménager pour émulsionner ou mélanger une préparation alimentaire fluide comprenant :
un récipient, qui comprend, à proximité du fond du récipient, un outil rotatif pour émulsionner ou mélanger la préparation alimentaire, et qui est pourvu d'un robinet de distribution comprenant un levier de manoeuvre d'une vanne d'ouverture asservie en fermeture,
un châssis supportant le récipient et comprenant un moteur électrique associé à des moyens d'entrainement de l'outil rotatif en rotation.

Selon l'invention, le récipient comprend une languette fixe située en regard du levier de manoeuvre, ledit levier de manoeuvre étant mobile entre une position éloignée de la languette fixe dans laquelle la vanne d'ouverture est fermée et une position rapprochée de la languette fixe dans laquelle la vanne d'ouverture est ouverte et le passage de la position éloignée à la position rapprochée du levier de manoeuvre s'effectue par un pincement de la languette fixe et du levier de manoeuvre par l'utilisateur. Un tel mode d'actionnement du levier de manoeuvre permet d'équilibrer les efforts exercés sur le récipient dans la mesure où la force appliquée sur le levier est égale et opposée à la force appliquée sur la languette fixe de sorte que les risques de basculement du récipient sont annulés.

Selon une forme de réalisation de l'invention, le levier de manoeuvre est mobile dans un plan vertical. Bien entendu, le levier de manoeuvre pourrait également être mobile dans un plan horizontal ou encore dans une autre direction.

Selon une variante de cette forme de réalisation, le levier de manoeuvre est situé en dessous de la languette fixe.

Selon une caractéristique de l'invention, la languette fixe est aménagée en partie basse d'une poignée de préhension du récipient.

Selon une autre caractéristique de l'invention, le robinet de distribution est démontable. Cette caractéristique permet de faciliter le nettoyage du robinet. Selon une caractéristique de l'invention visant à faciliter la vidange du récipient en réduisant les pertes de préparation alimentaire, le fond du récipient est incliné vers le robinet de distribution.

Selon une autre caractéristique de l'invention, le récipient est adapté de manière amovible sur le châssis. Il doit être remarqué que le mode d'actionnement du levier de distribution par pincement rend possible la manoeuvre dudit levier d'une main tandis que l'autre porte le récipient dans la mesure où le pincement n'augmente pas l'effort exercé par la main portant le récipient.

Selon encore une autre caractéristique de l'invention visant à simplifier le nettoyage de l'appareil ménager, le récipient est équipé d'un couvercle amovible.

Bien entendu, les différentes caractéristiques, variantes et formes de mise en oeuvre du procédé selon l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent des formes non limitatives de réalisation d'un appareil ménager, conforme à l'invention, pour émulsionner ou mélanger des préparations alimentaires fluides.
La figure 1 est une vue d'ensemble d'un appareil ménager, conforme à l'invention, pour émulsionner ou mélanger des préparations alimentaires fluides.
La figure 2 est une coupe axiale d'un récipient amovible de l'appareil ménager illustré à la figure 1.
La figure 3 est une coupe axiale d'un outil rotatif de l'appareil ménager illustré à la figure 1.
La figure 4 est une coupe axiale montrant une variante de réalisation d'un couvercle et d'un outil rotatif d'un appareil ménager, conforme à l'invention, pour émulsionner ou mélanger des préparations alimentaires fluides Il est à noter que sur ces figures les éléments structurels et/ou fonctionnels communs aux différentes variantes peuvent présenter les mêmes références.

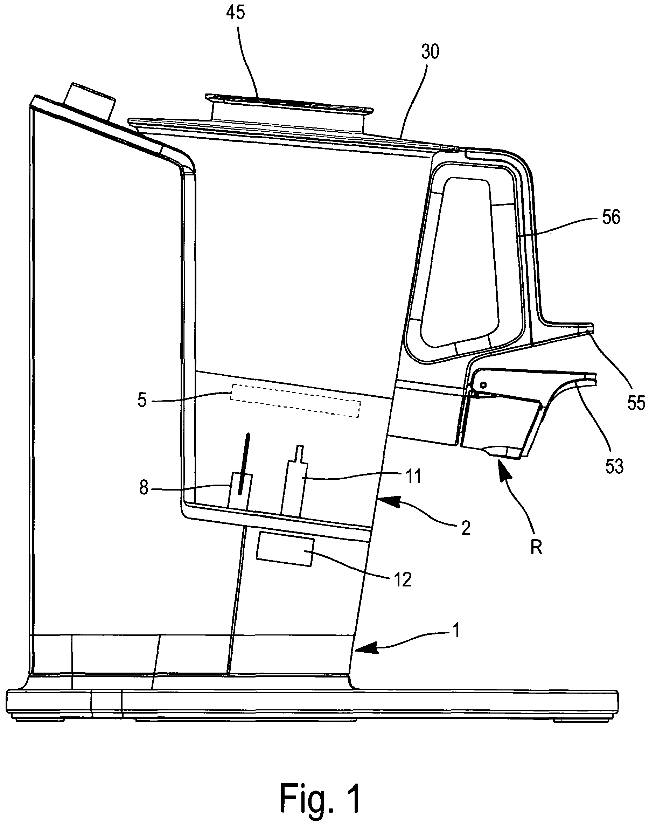

Un appareil ménager, selon l'invention, pour émulsionner ou mélanger une préparation alimentaire fluide comprend, comme le montre la figure 1, un châssis 1 supportant un récipient 2 qui, selon l'exemple illustré, est amovible ou démontable. Bien entendu, le récipient 2 pourrait également être intégré ou fixé de manière permanente au châssis 1.

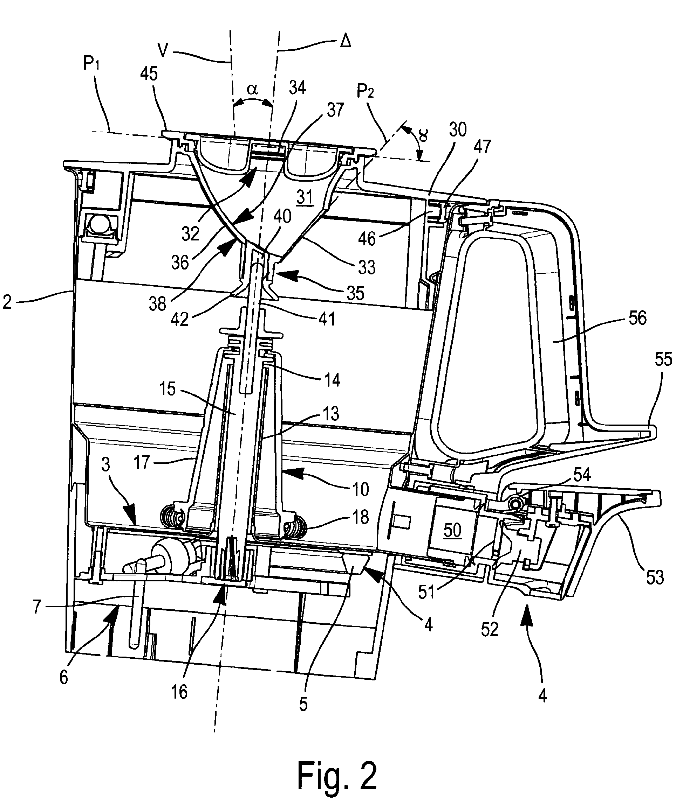

Le récipient 2 est muni d'un fond 3, visible à la figure 2, qui est associé à des moyens de chauffage 4 qui comprennent une résistance électrique 5 placée sous le fond 3 au contact de ce dernier de manière à permettre un chauffage par conduction des aliments contenus par le récipient sans être en contact direct avec ceux-ci. Afin d'assurer l'efficacité du chauffage, le fond 3 est de préférence réalisé en un matériau thermiquement conducteur tel que par exemple de l'acier inoxydable. Selon l'exemple illustré, la résistance électrique 5 est équipée d'un connecteur 6 comprenant deux fiches mâles 7 destinées à venir s'insérer dans deux fiches femelles complémentaires 8 qui équipent le châssis 1 et qui permettent un retrait aisé du récipient 2. Il est à noter qu'une seule fiche mâle 7 et une seule fiche femelle 8 sont visibles aux figures 1 et 2. Bien entendu, les moyens de chauffage 4 du contenu du récipient 2 pourraient être réalisés de toute autre manière appropriée et comprendre, par exemple, une source de micro-ondes, une source de rayons infrarouges ou encore un système d'induction électromagnétique induisant un chauffage du fond réalisé en partie au moins en un matériau ferromagnétique.

Le récipient 2 comprend également un robinet de distribution R situé à proximité de son fond 3 et permettant un soutirage du contenu du récipient comme cela apparaîtra par la suite. Il est à noter que le robinet de distribution R est de préférence amovible de manière à en faciliter le nettoyage.

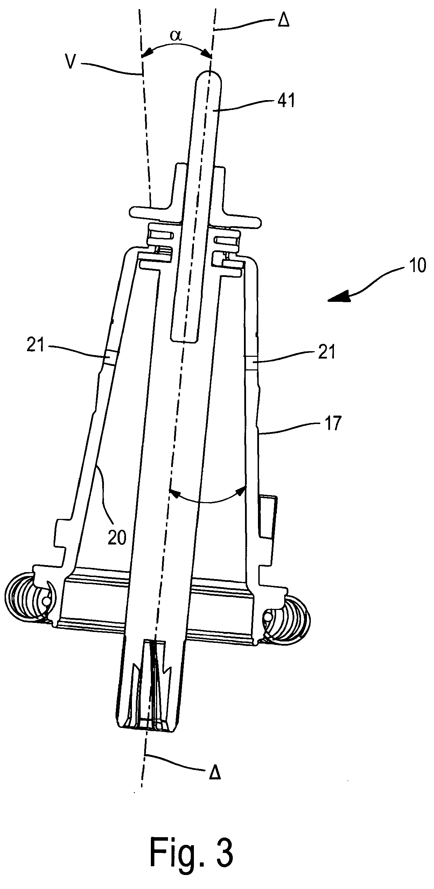

Afin de permettre le mélange ou l'émulsion des aliments qu'il contient, le récipient 2 comprend, à proximité de son fond 3, un outil rotatif 10 qui est mobile en rotation autour d'un axe Δ. L'outil rotatif 10 est représenté seul à la figure 3. Selon l'exemple illustré, l'entraînement en rotation de l'outil rotatif 10 est effectué de manière directe par accouplement mécanique dudit outil rotatif 10 avec des moyens 11 d'entraînement en rotation solidaires du châssis 1. Les moyens d'entraînement en rotation 11 sont alors associés à un moteur électrique 12 porté par le châssis 1. Le raccordement de l'outil rotatif 10 aux moyens d'entraînement 11 s'effectue au travers d'une cheminée 13 qui est cylindrique de révolution d'axe Δ et qui s'étend, partir du fond 3 du récipient 2, vers le haut à en étant ouverte au niveau de son extrémité supérieure 14. La partie inférieure de la cheminée 13 se trouve alors en regard des moyens d'entraînement 11. Dans la mesure où l'extrémité supérieure 14 de la cheminée est située à distance du fond 3 du récipient 2 il est possible de remplir ce dernier, sans risque de débordement, jusqu'à un niveau situé en dessous de celui de l'extrémité supérieure 14.

L'outil rotatif 10 comprend alors un organe d'accouplement 15 destiné à s'étendre à l'intérieur de la cheminée 14 et à coopérer avec les moyens d'entraînement 11. L'organe d'accouplement se présente, selon l'exemple illustré sous la forme d'un arbre 15 cylindrique de révolution d'axe Δ qui possède une longueur supérieure à celle de la cheminée 13 et qui présente un diamètre extérieur inférieur au diamètre intérieur de la cheminée 13. L'arbre 15 possède en outre, au niveau de son extrémité inférieure, une conformation d'accouplement 16 destinée à coopérer avec les moyens d'entraînement 11. L'organe d'accouplement 15 porte, au niveau de son extrémité supérieure opposée à son extrémité inférieure, une jupe creuse 17 d'axe Δ qui s'étend vers le bas de manière à être située à l'extérieur de la cheminée 13 lorsque que l'organe accouplement 15 s'y trouve disposé. La jupe creuse 17 porte, à l'opposé de sa zone de liaison avec l'organe accouplement 15, au moins un organe de travail 18 formé, selon l'exemple illustré, par un enroulement hélicoïdal à spires non jointives d'un fil d'acier inoxydable disposé selon un tore d'axe Δ qui s'étend à la périphérie de la base de la jupe creuse 17. La hauteur de la jupe creuse 17 est alors adaptée pour que l'organe de travail se trouve à proximité immédiate du fond du récipient 2 sans toutefois frotter sur ce dernier. Selon l'exemple illustré, l'axe de rotation Δ de l'outil rotatif est incliné d'un angle α par rapport à la verticale V. Afin d'éviter que lors de la rotation de l'outil rotatif 10, les liquides alimentaires contenus dans le récipient ne remontent sous l'effet de la force centrifuge le long de la paroi intérieure de la jupe creuse 17 jusqu'à atteindre l'extrémité supérieure 14 de la cheminée, la jupe creuse 17 s'évase vers le bas et sa surface intérieure 20 présente une forme tronconique dont les génératrices forment, avec l'axe Δ, un angle β supérieur ou égal à l'angle α. Dans le même sens et afin d'éviter les risques d'écoulement de liquides alimentaires par la cheminée 13 lors de la rotation de l'outil rotatif 10, cette disposition de l'invention est de préférence mais non nécessairement complétée par la mise en oeuvre d'au moins un et de préférence plusieurs canaux radiaux 21 traversant la jupe creuse 17 de sorte que les liquides alimentaires susceptibles de se trouver sur la surface intérieure de la jupe se trouvent éjectés vers l'extérieur sous l'effet de la force de centrifuge lors de la rotation de l'outil rotatif 10.

Par ailleurs, selon l'exemple illustré, afin de permettre un écoulement complet des liquides alimentaires contenus dans le récipient 2, le fond 3 est incliné vers le robinet R lorsque le châssis de l'appareil repose sur une surface sensiblement horizontale. De manière à assurer une efficacité optimale à l'outil rotatif 10, le fond 3 du récipient est alors de préférence sensiblement normal à l'axe Δ de rotation de l'outil rotatif 10 de sorte que l'organe de travail tourne dans un plan sensiblement parallèle au fond du récipient 2.

Afin d'éviter les projections de préparations alimentaires hors du récipient lors de la rotation de l'outil rotatif 10, l'appareil ménager comprend, comme le montre la figure 2, un couvercle 30 disposé sur la partie supérieure du récipient 2 de manière à l'obturer en partie au moins. Le couvercle 30 est de préférence amovible de manière à permettre un nettoyage aisé de l'intérieur du récipient 2 ainsi qu'un retrait de l'outil rotatif 10.

Le couvercle 30 comprend une trémie 31 d'introduction d'ingrédients dans le récipient 2. Une telle trémie 31 permet de verser des liquides alimentaires ainsi que d'introduire des ingrédients dans le récipient alors que l'outil rotatif 10 tourne sans risques de projection à l'extérieur du récipient. La trémie comprend une ouverture d'introduction 32 située sur le ou au-dessus du couvercle 30. Selon l'exemple illustré, l'ouverture d'introduction 32 se trouve sensiblement au-dessus de la face supérieure du couvercle 30. La trémie 31 d'introduction comprend également un orifice de sortie 33 qui est situé en dessous du couvercle 30 et débouche à l'intérieur du récipient 2. Dans le cas présent, l'ouverture d'introduction 32 est fermée par un bouchon amovible 34. De manière à limiter les risque de projections induites par le fonctionnement l'outil rotatif 10, le plan P1 de la section d'entrée de l'ouverture d'introduction 32 et le plan P2 de la section de sortie de l'orifice de sortie 33 forme un angle y compris entre 70° et 90°. De plus, afin d'éviter l'introduction d'ingrédients de trop grande taille, l'orifice de sortie 33 possède une section de sortie inférieure ou égale à 6 cm².

Afin, de garantir à un fonctionnement aussi silencieux que possible à l'appareil ménager en assurant un guidage en rotation de l'outil rotatif 10 optimal, la trémie 31 d'introduction comprend des moyens de guidage 35 en rotation de l'outil rotatif 10.

Selon l'exemple illustré, la trémie 31 d'introduction comprend, à l'opposé de l'ouverture d'introduction 32, une paroi de fond 36 dont la face 37 orientée vers l'ouverture d'introduction 32 est concave et dont la face 38 orientée vers l'intérieur du récipient 2 porte les moyens de guidage 35 en rotation de l'outil rotatif 10.

Les moyens de guidage 35 en rotation de l'outil rotatif 10 peuvent être réalisés de différentes manières. Dans le cas présent, les moyens de guidage 35 comprennent un alésage 40 de réception d'un doigt de guidage 41 porté par l'outil rotatif 10. Afin de faciliter l'engagement du doigt de guidage 41 dans l'alésage 40, ce dernier comprend une ouverture évasée définie par un rebord tronconique 42 convergeant vers l'intérieur de l'alésage 40.

Comme cela à été indiqué précédemment, le couvercle 30 est amovible. Afin de faciliter sa prise en main, l'ouverture introduction 32 est centrée par rapport à la face supérieure du couvercle et comprend une collerette périphérique 45 qui se trouve également centrée par rapport au couvercle et qui forme des moyens de préhension. De plus, le couvercle 30 comprend un rebord périphérique 46 qui s'étend vers l'intérieur du récipient et qui porte un joint d'étanchéité 47 destiné à coopérer avec une partie supérieure du bord périphérique du récipient 2. Le joint d'étanchéité 47 assure le maintien du couvercle 30 par son frottement contre le bord périphérique du récipient 2.

Lorsque la préparation alimentaire exécutée au moyen de l'appareil ménager selon l'invention est prête, le robinet de distribution R est utilisé afin de permettre un soutirage de la préparation alimentaire.

À cet effet le robinet de distribution R comprend un canal de distribution 50 qui débouche à l'intérieur du récipient 2 et dont une bouche 51 située à l'opposé du récipient 2 est obturée par une vanne d'ouverture 52 reliée à un levier de manoeuvre 53. La vanne d'ouverture 52 est asservie en fermeture par le levier de manoeuvre 53 qui est soumis à l'action du ressort 54 qui tend à maintenir la vanne d'ouverture en position fermée contre la bouche 51 lorsqu'aucun effort extérieur n'est exercé sur le levier de manoeuvre 53.

Afin de faciliter la manipulation du levier de manoeuvre 53 sans risquer de déstabiliser l'appareil ménager, le récipient comprend une languette fixe 55 située en regard du levier de manoeuvre 53 qui est alors conçu pour être mobile entre une position éloignée de la languette fixe, représentée figure 2, dans laquelle la vanne d'ouverture 52 est fermée et une position rapprochée de la languette fixe dans laquelle la vanne d'ouverture 52 est ouverte. Selon l'exemple illustré, le levier de manoeuvre 53 est mobile autour d'un axe sensiblement horizontal de sorte qu'il se déplace dans un plan sensiblement vertical. Par ailleurs, la languette fixe 55 est aménagée en partie basse d'une poignée 56 de préhension du récipient qui se trouve au-dessus du levier de manoeuvre 53.

Ainsi, lorsqu'un utilisateur souhaite soutirer la préparation alimentaire contenue dans le récipient 2, il pince à deux doigts le levier de manoeuvre 53 et la languette fixe 55 de manière à rapprocher le levier de manoeuvre 53 de cette dernière ce qui entraîne une ouverture de la bouche 51 et donc un écoulement du liquide contenu dans le récipient 2. Ce mode d'actionnement du levier mobile permet d'assurer un équilibrage des efforts exercés par l'utilisateur sur le récipient 2 de sorte que l'action sur le levier de manoeuvre 53 ne peut induire un basculement du récipient. De plus, ce mode d'actionnement du levier de manoeuvre 53 permet de le réaliser facilement alors que le récipient 2 est retiré du châssis 1 en étant tenu par la poignée 56.

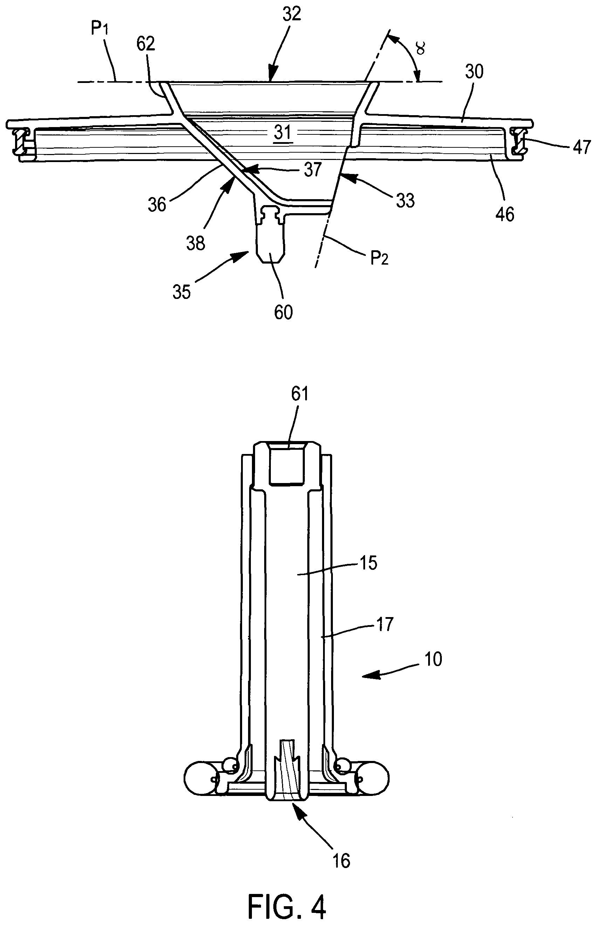

Selon l'exemple de réalisation décrit précédemment en relation avec la figure 2 notamment, les moyens de guidage en rotation 35 portés par la trémie 31 sont formés par un alésage 40 de réception d'un doigt de guidage 41 porté par l'outil rotatif 10. Toutefois, un tel mode de réalisation des moyens de guidage 35 n'est pas strictement nécessaire ainsi la figure 4 montre un autre exemple de réalisation selon lequel les moyens de guidage 35 comprennent un pion 60 qui est porté par la paroi de fond 36 de la trémie 31 et qui est destiné à venir s'insérer dans un alésage complémentaire 61 de l'outil rotatif 10.

Par ailleurs selon cet exemple, l'ouverture d'introduction 32 est délimitée par une collerette périphérique 62 qui s'étend en saillie de la face supérieure du couvercle 30 et qui forme des moyens de préhension de ce dernier. De plus la collerette périphérique 62 est centrée par rapport au couvercle 30 et présente une forme tronconique convergeant vers l'intérieur de ce dernier.

Bien entendu diverses autres modifications peuvent être apportées à l'appareil ménager selon l'invention dans le cadre des revendications annexées.

## Revendications

1. Appareil ménager pour émulsionner ou mélanger une préparation alimentaire fluide comprenant :
- un récipient (2), qui comprend, à proximité du fond (3) du récipient (2), un outil rotatif (10) pour émulsionner ou mélanger la préparation alimentaire, et qui est pourvu d'un robinet de distribution (R) comprenant un levier de manoeuvre (53) d'une vanne d'ouverture (52) asservie en fermeture,
- un châssis (1) supportant le récipient (2) et comprenant un moteur électrique (12) associé à des moyens d'entrainement (11) de l'outil rotatif (10) en rotation,
**caractérisé en ce que** le récipient (2) comprend une languette fixe (55) située en regard du levier de manoeuvre (53), ledit levier de manoeuvre (53) étant mobile entre une position éloignée de la languette fixe (55) dans laquelle la vanne d'ouverture (52) est fermée et une position rapprochée de la languette fixe (55) dans laquelle la vanne d'ouverture (52) est ouverte et **en ce que** le passage de la position éloignée à la position rapprochée du levier de manoeuvre (53) s'effectue par un pincement de la languette fixe (55) et du levier de manoeuvre (53) par l'utilisateur.

2. Appareil ménager selon la revendication précédente, **caractérisé en ce que** le levier de manoeuvre (53) est mobile dans un plan vertical.

3. Appareil ménager selon la revendication 2, **caractérisé en ce que** levier de manoeuvre (53) est situé en dessous de la languette fixe (55).

4. Appareil ménager selon l'une des revendications précédentes, **caractérisé en ce que** la languette fixe (55) est aménagée en partie basse d'une poignée (56) de préhension du récipient (2).

5. Appareil ménager selon l'une des revendications précédentes, **caractérisé en ce que** le robinet de distribution (R) est démontable.

6. Appareil ménager selon l'une des revendications précédentes, **caractérisé en ce que** le fond (3) du récipient (2) est incliné vers le robinet de distribution (R).

7. Appareil ménager selon l'une des revendications précédentes, **caractérisé en ce que** le récipient (2) est adapté de manière amovible sur le châssis (1).

8. Appareil ménager selon l'une des revendications précédentes, **caractérisé en ce que** le récipient (2) est équipé d'un couvercle amovible (30).

## Patentansprüche

1. Haushaltsgerät zum Emulgieren oder Mischen eines flüssigen Nahrungsmittels, welches Folgendes umfasst:
- einen Behälter (2), der nahe des Bodens (3) des Behälters (2) ein drehendes Werkzeug (10) zum Emulgieren oder Mischen des Nahrungsmittels umfasst und der mit einem Ausgabehahn (R) mit einem Hebel (53) zum Betätigen eines im geschlossenen Zustand geregelten Öffnungsventils (52) ausgestattet ist,
- ein Gestell (1), das den Behälter (2) trägt und einen Elektromotor (12) umfasst, der mit Mitteln (11) zum Drehantrieb des drehenden Werkzeugs (10) verbunden ist, **dadurch gekennzeichnet, dass** der Behälter (2) eine feststehende Lasche (55) aufweist, die sich gegenüber dem Betätigungshebel (53) befindet, wobei sich der genannte Betätigungshebel (53) zwischen einer von der feststehenden Lasche (55) entfernten Stellung, in der das Öffnungsventil (52) geschlossen ist, und einer näher zur feststehenden Lasche (55) befindlichen Stellung, in der das Öffnungsventil (52) geöffnet ist, bewegen lässt, und dass der Übergang von der entfernten Stellung zu der näheren Stellung des Betätigungshebels (53) durch ein Zusammendrücken der feststehenden Lasche (55) und des Betätigungshebels (53) durch den Benutzer erfolgt.

2. Haushaltsgerät nach dem vorhergehenden Anspruch, **dadurch gekennzeichnet, dass** sich der Betätigungshebel (53) in einer vertikalen Ebene bewegen lässt.

3. Haushaltsgerät nach Anspruch 2, **dadurch gekennzeichnet, dass** sich der Betätigungshebel (53) unterhalb der feststehenden Lasche (55) befindet.

4. Haushaltsgerät nach einem der vorhergehenden Ansprüche, **dadurch gekennzeichnet, dass** die feststehende Lasche (55) am unteren Teil eines Griffs (56) des Behälters (2) ausgeführt ist.

5. Haushaltsgerät nach einem der vorhergehenden Ansprüche, **dadurch gekennzeichnet, dass** der Ausgabehahn (R) abnehmbar ist.

6. Haushaltsgerät nach einem der vorhergehenden Ansprüche, **dadurch gekennzeichnet, dass** der Boden (3) des Behälters (2) zum Ausgabehahn (R) hin geneigt ist.

7. Haushaltsgerät nach einem der vorhergehenden Ansprüche, **dadurch gekennzeichnet, dass** der Behälter (2) abnehmbar auf dem Gestell (1) ausgeführt ist.

8. Haushaltsgerät nach einem der vorhergehenden Ansprüche, **dadurch gekennzeichnet, dass** der Behälter (2) mit einem abnehmbaren Deckel (30) ausgestattet ist.

## Claims

1. Domestic appliance for emulsifying or mixing a liquid food preparation comprising:
- a container (2) comprising, near the bottom (3) of the container (2), a rotary tool (10) for emulsifying or mixing the food preparation, and which is provided with a dispensing tap (R) comprising a lever (53) for operating an opening valve (52) slaved in the closed position,
- a frame (1) supporting the container (2) and comprising an electric motor (12) associated with means (11) for driving the rotary tool (10) in rotation, **characterised in that** the container (2) comprises a fixed tab (55) facing the operating lever (53), said operating lever (53) being movable between a position far from the fixed tab (55) in which the opening valve (52) is closed and a position near to the fixed tab (55) in which the opening valve (52) is open and **in that** the transition from the far position to the near position of the operating lever (53) is carried out by the user squeezing together the fixed tab (55) and the operating lever (53).

2. Domestic appliance according to the preceding claim, **characterised in that** the operating lever (53) is movable in a vertical plane.

3. Domestic appliance according to claim 2, **characterised in that** the operating lever (53) is located below the fixed tab (55).

4. Domestic appliance according to one of the preceding claims, **characterised in that** the fixed tab (55) is arranged in the lower part of a handle (56) for gripping the container (2).

5. Domestic appliance according to one of the preceding claims, **characterised in that** the dispensing tap (R) is removable.

6. Domestic appliance according to one of the preceding claims, **characterised in that** the bottom (3) of the container (2) is inclined towards the dispensing tap (R).

7. Domestic appliance according to one of the preceding claims, **characterised in that** the container (2) is removably fitted on the frame (1).

8. Domestic appliance according to one of the preceding claims, **characterised in that** the container (2) is equipped with a removable lid (30).
